# NEW EUROPEAN PATENT SPECIFICATION

(11) **EP 3 784 734 B2**
(45) Date of publication and mention of the opposition decision: **30.09.2026**
(45) Mention of the grant of the patent: 06.12.2023
(21) Application number: 19728143.9
(22) Date of filing: 25.04.2019
(51) Int. Cl.: C08L 23/12

(54) **POLYPROPYLENE COMPOSITION AND MOLDED ARTICLE**
POLYPROPYLENZUSAMMENSETZUNG UND FORMARTIKEL
COMPOSITION DE POLYPROPYLÈNE ET ARTICLE MOULÉ

(30) Priority: 27.04.2018 JP 2018087302
(43) Date of publication of application: 03.03.2021
(73) Proprietor: Basell Poliolefine Italia S.r.l., 20121 Milano (IT)
(72) Inventor: YOKOYAMA, Yutaka, Kawasaki-shi, Kanagawa 210-0863 (JP); KAMIMURA, Akihiro, Kawasaki-shi, Kanagawa 210-0863 (JP); KAJIOKA, Hiroshi, Kawasaki-shi, Kanagawa 210-0863 (JP)
(74) Representative: LyondellBasell
(86) International application number: PCT/JP2019/018653
(87) International publication number: WO 2019/208836

(56) References cited:
- EP-A1- 1 935 938
- WO-A1-2011/036014
- WO-A1-2011/036014
- WO-A1-2011/036021
- WO-A1-2013/010879
- WO-A1-2017/085194
- WO-A1-2017/085195
- WO-A1-2017/085196
- WO-A1-92/19653
- WO-A1-99/24479
- JP-A- 2012 214 709
- US-A1- 2010 016 510
- US-A1- 2017 267 794
- Technical data sheet from the “Polytrack 8502 catalyst”, from Grace, 2006
- NELLO PASQUINI: "Polypropylene handbook , 2nd Edition", 30 July 2005, HANSER, ISBN: 1-56990-385-9, article E. ALBIZZATI, G. CECCHIN, J. C. CHADWICK, G. COLLINA, U. GIANNINI, G. MORINI, L. NORISTI: "2.1 Ziegler–Natta Catalysts and Polymerizations", pages: 15 - 106, XP009563803
- HARUTUN G. KARIAN: "Handbook of polypropylene and polypropylene composites", 1 January 2003, MARCEL DEKKER, article KISSEL WILLIAM J, ET AL: "Chapter 2: Polypropylene: Structure, Properties, Manufacturing Processes, and Applications", pages: 1 - 8, XP055857406
- Print-out listing customers to which a sample of PPC 8840 grade polymer was provided in a period between May 2014 to October 2015, including the customer listed in R13. The names of the customers were redacted for confidentiality reasons
- Delivery note of PPC 8840 grade polymer to SMP Deutschland GmbH, bearing date of December 10, 2014.
- Quality certificate of PPC 8840 grade polymer delivered to SMP Deutschland GmbH, bearing date of December 10, 2014.
- Technical data sheet of PPC 8840, dated April, 2015.
- Production request, bearing the date of October 8, 2013, provided to the production plant requesting the production of a resin with plant code 85105SM and Lot n° 3M18DZJ7.
- Analysis sheet of the resin produced according to the request R16, referring to the same plant code and Lot n° as R16.
- Print-out of the properties recorded in the Opponent’s LIMS database on December 19, 2013 for the produced 85105SM resin, reporting the data as mentioned on R17
- Analysis report of 3 March 2014 on resin PPC 8840 resin (pellets) with Lot n° 3M18DZJ7 for sample with number 646455.
- DSC analysis sheet of sample 646455 from PPC 8840 grade polymer, with Lot n° 3M18DZJ7, as mentioned on R19A.
- Plant analysis report dated 18 December 2013 filled in during the production of the 85105SM resin with Lot n° 3M18DZJ7
- Plant analysis report dated 19 December 2013 filled in during the production of the 85105SM resin with Lot n° 3M18DZJ7
- Print-out of properties, recorded in the Opponent’s LIMS database on December 19, 2013, for the homopolymer component of the PPC 8840 grade polymer with Lot n° 3M18DZJ7, as recorded in R20.
- Analysis report of 06 November 2015 reporting analyses performed on PPC 8840 resin (pellets) with Lot n° 3M18DZJ7 (indicates the same test run number as reported in R17).
- T184514

## Description

### Technical Field

The present invention relates to a polypropylene composition and more specifically to a polypropylene composition for injection molding.

### Background Art

Having excellent physical properties, polypropylene is used in various applications. However, for use as an automobile interior material, higher impact resistance, higher stiffness and higher melt flowability are required. For example, in PTL 1, a propylene copolymer composition which comprises propylene polymer A) containing 0 to 10% by weight of olefins other than propylene, and at least one propylene copolymer B) containing 5 to 40% by weight of olefins other than propylene, wherein propylene polymer A and propylene copolymer B are present as separate phases, is disclosed. The composition has excellent impact toughness at low temperature. In PTL 2, a resin composition having high melt flowability produced by melt-kneading a mixture containing a ratio of 0.02 to 0.08 parts by weight of a molecular weight reducing agent relative to a polypropylene resin composition in a melt-kneading step to reduce the molecular weight is disclosed. Further, in PTL 3, a polypropylene resin composition comprising 40 to 80% by mass of polypropylene resin (A), 5 to 30% by mass of ethylene/α-olefin copolymer (B), and 15 to 30% by mass of inorganic filler (C) is disclosed. The composition has a high impact resistance at low temperature.

### Citation List

### Patent Literature

PTL 1: JP2005-529227A
PTL 2: JP3955707B
PTL 3: JP2015-113363A
PTL4: WO 2011/036014 A1

### Summary of Invention

### Technical Problem

However, the composition described in PTL 1 has insufficient melt flowability. In order to improve the melt flowability, it is efficient to add the molecular weight reducing agent described in PTL 2 to the composition. However, it is known that a polypropylene resin composition produced by melt-kneading a mixture with addition of an organic peroxide as molecular weight reducing agent has a narrow molecular weight distribution, because higher molecule weight components are more easily subjected to molecular scission. When injection molded, a composition with a narrow molecular weight distribution may cause appearance defects such as flow marks and silver streaks on the surface of a molded article. Furthermore, there is concern over the possibility that the environmental damage or the health damage such as odor and VOC (volatile organic compounds) emission to the atmosphere may be caused by the effect of generation of volatile components resulting from the reduction in the molecular weight and residues of organic peroxides. While the composition used only for automobile fenders described in PTL 2 causes no problem, there is concern over the problem described above when the composition is used for automobile interior materials, food packaging materials or the like, which have a large effect on users and are supplied to the market in a large amount at low price. Also, the composition described in PTL 3 has improved melt flowability, but achieves insufficient balance between the stiffness and the impact resistance. It is efficient for the improvement of the balance between the impact resistance and the stiffness to increase the content of ethylene/α-olefin copolymer (B). However, such a composition results in suppression of the content of polypropylene resin (A) having excellent ease of production, being improper from the perspective of supplying to the market in a large amount at low price. Meanwhile, as a method for improving the balance between the stiffness and the impact resistance without suppression of the content of polypropylene resin (A), it is effective to increase the content of the ethylene/propylene copolymer contained in (A). However, if such a composition is produced by the conventional production method, when the powder polymer produced in a polymerization reactor is stored or transferred, adhesion of particles to each other or adhesion of particles to a vessel or a piping wall occurs, so that the powder flowability decreases, resulting in difficulty in production. In particular, since a composition excellent in melt flowability contains a larger amount of low molecular weight components, the powder flowability tends to deteriorate due to the sticky powder surface, resulting in difficulty in stable continuous production. In the light of these circumstances, an object of the present invention is to provide a polypropylene composition excellent in the melt flowability and the balance between the stiffness and the impact resistance without addition of an organic peroxide, capable of being stably produced, and suitable for obtaining an injection molded articles with good appearance.

### Solution to Problem

The inventors have found that a specific polypropylene composition solves the mentioned problem. In other words, the problem is solved by the present invention described below.
[1] A polypropylene composition comprising a polymer consisting of component (1) and component (2):
   as component (1), a propylene homopolymer having an MFR of 100 to 300 g/10 min (at a temperature of 230°C under a load of 2.16 kg) and containing 97.5% by weight or more of xylene insolubles (XI), wherein XI of the propylene homopolymer has an Mw/Mn of 4 to 10 as measured by GPC;
   as component (2), an ethylene/propylene copolymer containing 15 to 50% by weight of an ethylene-derived unit;
   wherein the polypropylene composition has the following characteristics:
      1) the relative proportions of component (1) and component (2) are, respectively, not less than 50 parts by weight but less than 70 parts by weight and more than 30 parts by weight but not more than 50 parts by weight,
      2) the intrinsic viscosity of xylene solubles (XSIV) of the aforementioned polymer is in the range of 1.5 to 4.0 dl/g,
      3) the MFR (at a temperature of 230°C under a load of 2.16 kg) of the aforementioned polymer is in the range of 20 to 100 g/10 min
   wherein the aforementioned component (1) is porous particles having an average particle size of 1.5 to 4.0 mm and an average pore diameter (Dn) of 8 to 50 mm; and
   wherein the aforementioned polymer consisting of component (1) and component (2) is a powder, and flowability of the powder is 3.5 or less.

### Advantageous Effects of Invention

The present invention can provide a polypropylene composition excellent in melt flowability and balance between stiffness and impact resistance without addition of an organic peroxide, capable of being stably produced, and suitable for obtaining an injection molded article with good appearance.

### Brief Description of Embodiments

The present invention is described in detail as follows. "X to Y" includes the end values X and Y.

### 1. Polypropylene composition

The polypropylene composition of the present invention comprises a polymer consisting of component (1) and component (2) described below.
Component (1): a propylene homopolymer having an MFR of 100 to 300 g/10 min (at a temperature of 230°C under a load of 2.16 kg), containing 97.5% by weight or more of xylene insolubles (XI), wherein the XI has an Mw/Mn of 4 to 10 as measured by GPC. and is porous particles having an average particle diameter of 1.5 to 4.0 mm and an average pore diameter (Dn) of 8 to 50 micro m
Component (2): an ethylene/propylene copolymer containing 15 to 50% by weight of an ethylene-derived unit.

### (1) Component (1)

Component (1) is a propylene homopolymer having an MFR of 100 to 300 g/10 min (at a temperature of 230°C under a load of 2.16 kg), containing 97.5% by weight or more of xylene insolubles (XI), wherein the XI has an Mw/Mn of 4 to 10 as measured by GPC. The propylene homopolymer component may include less than 0.5% by weight of monomer units other than propylene, arising from a recycled gas, or the like generated in production of the polymer containing a copolymer component. With an MFR of component (1) equal to or more than the lower limit of the range, the composition has excellent melt flowability, while with an MFR of component (1) equal to or less than the upper limit, the composition has excellent impact resistance. From such a perspective, MFR of component (1) is preferably 150 to 300 g/10 min, more preferably 180 to 300 g/10 min. With a content of XI of equal to or more than the lower limit of the range, the balance among mechanical properties such as the stiffness and the impact resistance of the composition is excellent. From this perspective, XI is preferably 98.0% by weight or more, more preferably 98.3% by weight or more. With an Mw/Mn as measured by GPC of XI equal to or more than the lower limit of the range, defects such as flow marks and silver streaks hardly occur on the surface of a molded article to make excellent appearance, while with an Mw/Mn equal to or less than the upper limit of the range, the impact resistance is excellent. From this perspective, Mw/Mn is preferably 4 to 8, more preferably 5 to 7.

Component (1) is a powder, and the particles thereof have an average particle size (diameter) of, preferably 1.5 to 4.0 mm, more preferably 1.5 to 3.0 mm. The average particle size is an arithmetic average diameter of particles photographed by the optical microscopic method defined in JIS Z8901. In an embodiment, the number of particles per gram is measured to determine the average weight per piece and the average volume per piece is determined from the bulk density, so that the average particle size is obtained as the average diameter of spheres from the average volume. Here, the bulk density can be measured by dividing the volume (bulk volume) of component (1) placed in a sealed container by the weight. It is conceivable that with an average particle size less than 1.5 mm, the powder tends to be sticky due to an increased surface area, so that the powder flowability deteriorates. With an average particle size more than 4.0 mm, the particles tend to be broken to generate fine powder, resulting in unfavorable deposition on the wall in a reaction vessel, clogging in a pipe transportation step, and the like.

Component (1) is made of porous particles having an average pore diameter Dn of 8 to 50 µm. Dn is an average of pore diameters D measured by the mercury porosimetry according to JIS R1655. With a Dn in the range, the polymer (polymer mixture) consisting of component (1) and component (2) has improved powder flowability. From this perspective, Dn is more preferably 8 to 30 µm, particularly preferably 8 to 15 µm. A mechanism for improving the powder flowability with the specified Dn will be described below.

### (2) Component (2)

Component (2) is an ethylene/propylene copolymer, containing 15 to 50% by weight of ethylene-derived units. The upper limit of the content of ethylene-derived units is 50% by weight or less, preferably 40% by weight or less, more preferably 35% by weight or less. With a content beyond the upper limit, the powder flowability, i.e., flowability of powder polymer consisting of component (1) and component (2) produced in a polymerization reactor, deteriorates, so that the production stability is reduced. The lower limit of the content of the ethylene-derived units is 15% or more, preferably 20% by weight or more. With a content less than the lower limit, the impact resistance is reduced.

### (3) Composition ratio

Regarding the composition ratio (weight ratio) between component (1) and component (2), the relative proportions of component (1) and component (2) are, respectively, not less than 50 parts by weight but less than 70 parts by weight; and more than 30 parts by weight but not more than 50 parts by weight,. Those are preferably not less than 55 but less than 70 and more than 30 but not more than 45, respectively. Those are more preferably not less than 55 but not more than 65 and not less than 35 but not more than 45, respectively (the ratio is "55 to 65" : "35 to 45".). With a content of component (1) more than the upper limit, the impact resistance is reduced. With a content less than the lower limit, the powder flowability deteriorates, so that the production stability is reduced.

### (4) Characteristics of polymer consisting of component (1) and component (2) 1) XSIV

The intrinsic viscosity (XSIV) of xylene solubles (XS) of the polymer consisting of component (1) and component (2) to constitute the polypropylene composition of the present invention is an index of the molecular weight of the components having non-crystallinity in the polymer. XSIV is determined by obtaining components soluble in xylene at 25°C and measuring the intrinsic viscosity of the components by a conventional method. In the present invention, XSIV is in the range of 1.5 to 4.0 dl/g, preferably 1.5 to 3.5, more preferably 1.5 to 3.0. With an XSIV more than the upper limit, the melt flowability is reduced. With an XSIV less than the lower limit, the impact resistance is reduced and the powder flowability deteriorates to reduce the production stability.

### 2) MFR

MFR of the polymer consisting of component (1) and component (2) of the present invention is measured at a temperature of 230°C under a load of 2.16 kg, being 20 to 100 g/10 min, preferably 25 to 60 g/10 min, more preferably 28 to 50 g/10 min. With an MFR more than the upper limit, the impact resistance is reduced and difficulties occur in production of the polymer. With an MFR less than the lower limit, the capability of injection molding of the composition is reduced.

### 3) Structure and the like

The polypropylene composition of the present invention comprises a polymer consisting of components (1) and (2), and other components such as additives and fillers described below on an as needed basis. It is preferable that the polymer consisting of components (1) and (2) of the present invention have a structure where component (2) is dispersed in component (1), such that component (2) is held in pores of component (1). For example, it is preferable that component (2) as a viscoelastic material be held in the pores of component (1) as porous particles, and the polymer be in a powder form. The powder has a flowability of 3.5 or less. The powder flowability is the flowability of a powder polymer produced in a polymerization reactor, and an index of the production stability of the polymer. Specifically, the powder flowability is a quantified value of the flowability of powder, when the powder on a substrate flows on a tilted substrate after removal of a specific load applied to the powder placed on the substrate at a specific temperature for a specific time period. As the value of powder flowability decreases, the powder flowability improves, so that the production stability is improved. The powder flowability of the polymer is preferably 3.5 or less, more preferably 3.0 or less, still more preferably 2.0 or less. Due to the mentioned structure and component (1) having an average pore diameter Dn in the range described above, the powder flowability of the polymer consisting of component (1) and component (2) improves. A presumed reason therefor is as follows, though not limited thereto. With component (1) having a Dn in the range described above, both of the sufficient size of pores and summation of the surface areas of pores are achieved for the existence of component (2) in component (1), so that component (2) is easily held in component (1), resulting in improvement in the powder flowability of the polymer; while with a Dn out of the range, component (2) is hardly held in component (1), so that the powder flowability of the polymer deteriorates.

The powder flowability is measured by the following method.

On a metal substrate (first substrate), a frame having an opening with a length of 5 cm, a width of 5 cm, and a height of 1 cm is placed. In the frame, 5 g of powder polymer consisting of components (1) and (2) as a sample is spread. A second substrate is placed on the frame, such that a uniform pressure of 23 g/cm² is applied to the sample. After the sample in the frame was held at 70°C for 20 minutes, the frame and the second substrate are removed, and the first substrate on which the sample is placed is tilted to evaluate the degree of collapse of the sample based on the following criteria.
1: The total volume of sample collapses when the substrate is tilted at 0° or more and less than 30°.
2: The total volume of sample collapses when the substrate is tilted at 30° or more and less than 50°.
3: The total volume of sample collapses when the substrate is tilted at 50° or more and less than 70°.
4: The total volume of sample collapses when the substrate is tilted at 70° or more and less than 90°.
5: No total volume collapse occurs even when the substrate is tilted at 90° or more.

The first substrate and the second substrate are preferably made of stainless steel from the perspective of thermal conductivity and rust prevention when repeatedly used. Preferably, the first substrate has a surface roughness (maximum roughness Ry) of 1 µm or less so as to be unaffected by the friction with the powder.

### (6) Other components

To the polypropylene composition of the present invention, conventional additives for common use in the field such as antioxidants, chlorine absorbers, heat-resistant stabilizers, light stabilizers, ultraviolet absorbers, internal lubricants, external lubricants, antiblocking agents, antistatic agents, antifogging agents, flame retardants, dispersants, nucleating agents, copper inhibitors, neutralizers, plasticizers, defoaming agents, crosslinking agents, oil extensions, and other organic and inorganic pigments, may be added. The amount of each additive added may be a known amount. Further, the polypropylene composition of the present invention may contain one or more resins or elastomers other than the mentioned resin components within a range not impairing the effect of the present invention.

Also, the polypropylene composition of the present invention may contain fillers as components other than the additives described above, within a range not impairing the effect of the present invention. The fillers are added mainly for the purpose of improving the stiffness of the material, and examples thereof include inorganic fillers such as talc, clay, calcium carbonate, magnesium hydroxide and glass fiber, and organic fillers such as carbon fiber and cellulose fiber. In order to improve the dispersibility of the fillers, on an as needed basis the fillers may be subjected to surface treatment, or a master batch of the filler and the resin may be prepared. Among the fillers, talc is preferred from the perspective of excellent dispersibility with polyolefins and easiness of improvement in the stiffness of a molded article. The content of filler may be a known quantity.

### (6) Pellet

The polypropylene composition of the present invention comprises a polymer consisting of component (1) and component (2), and other components such as the additives and fillers on an as needed basis, and may be in a powder form, from which a pellet may be formed through melting and kneading. A pellet is a pelletized article having a certain shape such as a spherical, ellipsoid, cylindrical, or prism shape. The pellet is made by melting and kneading the powder polymer consisting of component (1) and component (2), which constitutes the polypropylene composition as defined in claim 1 and then extruding the polymer to be cut by a cutter or pelletizer. The pellet of the polypropylene composition defined in claim 1 has excellent flowability without decomposition caused by an organic peroxide during melting and kneading. As described above, increase in flowability (MFR) produced by decomposition with an organic peroxide narrows the molecular weight distribution, or results in decrease in Mw/Mn of XI of component (1). Meanwhile, the pellet is not subjected to decomposition caused by an organic peroxide, so that Mw/Mn of XI is maintained in a specific range. Although the size of the pellet is not particularly limited, the weight per particle is preferably 10 to 40 mg. The other components described above may be additionally added to the polymers to constitute the polypropylene composition in granulation, or the pellet after granulation may be blended with the other components described above so as to make the composition.

### 2. Production method

The polypropylene composition of the present invention is produced by a known method. For example, the polymer to constitute the polypropylene composition of the present invention may be produced by polymerizing a raw material monomer of component (1) and raw material monomers of component (2) by using two or more reactors. In particular, it is preferable that a raw material monomer of component (1) be polymerized to produce a homopolymer of component (1), and raw material monomers of component (2) be polymerized in the presence of the homopolymer so as to produce a copolymer. The polymerization of component (1) and component (2) may be performed in a liquid phase, a gas phase or a liquid-gas phase.

In the polymerization, a Ziegler-Natta catalyst consisting of (a) a solid catalyst containing magnesium, titanium, a halogen, and an internal electron donor; (b) an organoaluminium compound; and, on an as needed basis, (c) an external electron donor, or a metallocene catalyst may be used.

### (1) Solid catalyst (component (a))

Component (a) may be prepared by a known method including, for example, bringing a magnesium compound, a titanium compound and an electron donor compound into contact with each other. On this occasion, the conditions for contact among the compounds contained in the component and the conditions for precipitation are adjusted by a method which is not particularly limited, depending on the constituent components of the solid catalyst, the types of solvent and dispersant selected, the temperature of solvent, and the stirring rate, so that the average diameter (average particle size) and the average pore diameter of the catalyst particles to be produced can be controlled in the desired ranges. The polymer particle has a similar figure to the catalyst particle, being a so-called replica, so that through the control of the shape of the catalyst particle as described above, the average particle size (diameter) and the average pore diameter (Dn) of the propylene homopolymer (component (1)) polymerized by using the catalyst can be maintained in specific ranges.

As the titanium compound for use in preparation of component (a), a tetravalent titanium compound represented by a general formula: Ti(OR)_{g}X_{4-g} is suitable. In the formula, R represents a hydrocarbon group and X represents a halogen, and 0 ≤ g ≤ 4. More specifically, examples of the titanium compound thereof include a tetra-halogenated titanium compound such as TiCl₄, TiBr₄ and TiI₄; a tri-halogenated alkoxytitanium such as Ti(OCH₃)Cl₃, Ti(OC₂H₅)Cl₃, Ti(Oₙ-C₄H₉)Cl₃, Ti(OC₂H₅)Br₃ and Ti(OisoC₄H₉)Br₃; di-halogenated alkoxytitanium such as Ti(OCH₃)₂Cl₂, Ti(OC₂H₅)₂Cl₂, Ti(Oₙ-C₄H₉)₂Cl₂ and Ti(OC₂H₅)₂Br₂; a mono-halogenated tri-alkoxytitanium such as Ti(OCH₃)₃Cl, Ti(OC₂H₅)₃Cl, Ti(Oₙ-C₄H₉)₃Cl and Ti(OC₂H₅)₃Br; and tetra-alkoxytitanium such as Ti(OCH₃)₄, Ti(OC₂H₅)₄ and Ti(Oₙ-C₄H₉)₄. Among these, a halogen-containing titanium compound, a tetra-halogenated titanium in particular, is preferred, and titanium tetrachloride is particularly preferred.

Examples of the magnesium compound for use in preparation of component (a) include a magnesium compound having a magnesium-carbon bond or a magnesium-hydrogen bond such as dimethylmagnesium, diethylmagnesium, dipropylmagnesium, dibutylmagnesium, diamylmagnesium, dihexylmagnesium, didecylmagnesium, ethylmagnesium chloride, propylmagnesium chloride, butylmagnesium chloride, hexylmagnesium chloride, amylmagnesium chloride, butylethoxy magnesium, ethylbutyl magnesium and butylmagnesium hydride. These magnesium compounds may be used, for example, in a form of complex compound with organoaluminium, and may be in a liquid form or a solid form. Examples of the preferred magnesium compound further include a halogenated magnesium such as magnesium chloride, magnesium bromide, magnesium iodide and magnesium fluoride; an alkoxymagnesium halide such as methoxymagnesium chloride, ethoxymagnesium chloride, isopropoxymagnesium chloride, butoxymagnesium chloride and octoxymagnesium chloride; an aryloxymagnesium halide such as phenoxymagnesium chloride and methylphenoxy magnesium chloride; an alkoxymagnesium such as ethoxymagnesium, isopropoxymagnesium, butoxymagnesium, n-octoxymagnesium and 2-ethylhexoxymagnesium; an aryloxymagnesium such as phenoxymagnesium and dimethylphenoxy magnesium; and a carboxylate of magnesium such as magnesium laurate and magnesium stearate.

The electron donor compound for use in preparation of compound (a) is generally referred to as "internal electron donor compound". In the present invention, a known one such as a phthalate compound, a succinate compound, a diether compound, diphenyl dicarboxylate described in JP 2013-28704A, cyclohexene dicarboxylate described in JP 2014-201602A, dicycloalkyl dicarboxylate described in JP 2013-28705A, diol dibenzoate described in JP 4959920B, and 1,2-phenylene dibenzoate described in International Publication No. WO 2010/078494 may be used.

### (2) Organoaluminium compound (component (b))

Examples of the organoaluminium compound of component (b) include the following:
a trialkylaluminum such as triethyl aluminum and tributyl aluminum;
a trialkenylaluminum such as triisoprenylaluminum;
a dialkylaluminum alkoxide such as diethylaluminum ethoxide and dibutylaluminum butoxide;
an alkyl aluminum sesquialkoxide such as ethyl aluminum sesquiethoxide and butyl aluminum sesquibutoxide;
a partially halogenated alkylaluminum such as an alkylaluminum dihalogenide such as ethylaluminum dichloride, propylaluminum dichloride and butylaluminum dibromide;
a dialkylaluminum hydride such as diethylaluminum hydride and dibutylaluminum hydride;
a partially hydrogenated alkylaluminum such as an alkylaluminum dihydride an such as ethylaluminum dihydride and propylaluminum dihydride; and
a partially alkoxylated and halogenated alkylaluminum such as ethylaluminum ethoxy chloride, butylaluminum butoxy chloride, and ethylaluminum ethoxy bromide.

### (3) Electron donor compound (component (c))

The electron donor compound of component (c) is generally referred to as "external electron donor compound". As such a compound, an organosilicon compound is preferred. Examples of the preferred organosilicon compound include the following:
trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p-tolyldimethoxysilane, bis-p-tolyldiethoxysilane, bisethylphenyldimethoxysilane, dicyclopentyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, γ-chloropropyltrimethoxysilane, methyltriethoxysilane, ethyltriethoxysilane, vinyltriethoxysilane, t-butyltriethoxysilane, thexyltrimethoxysilane, n-butyltriethoxysilane, iso-butyltriethoxysilane, phenyltriethoxysilane, γ-aminopropyltriethoxysilane, chlorotriethoxysilane, ethyltriisopropoxysilane, vinyltributoxysilane, cyclohexyltrimethoxysilane, cyclohexyltriethoxysilane, 2-norbornanetrimethoxysilane, 2-norbornanetriethoxysilane, 2-norbornanemethyldimethoxysilane, ethyl silicate, butyl silicate, trimethylphenoxysilane, methyltriallyloxysilane, vinyltris(P-methoxyethoxysilane), vinyltriacetoxysilane, dimethyltetraethoxydisiloxane, methyl(3,3,3-trifluoro-n-propyl)dimethoxysilane, cyclohexylethyldimethoxysilane, cyclopentyl-t-butoxydimethoxysilane, diisobutyldimethoxysilane, isobutylisopropyldimethoxysilane, n-propyltrimethoxysilane, di-n-propyldimethoxysilane, thexyltrimethoxysilane, t-butylethyldimethoxysilane, t-butylpropyldimethoxysilane, t-butyl-t-butoxydimethoxysilane, isobutyltrimethoxysilane, cyclohexylisobutyldimethoxysilane, di-sec-butyldimethoxysilane, isobutylmethyldimethoxysilane, bis(decahydroisoquinolin-2-yl)dimethoxysilane, diethylaminotriethoxysilane, dicyclopentyl-bis(ethylamino)silane, tetraethoxysilane, tetramethoxysilane and isobutyltriethoxysilane.

In particular, ethyltriethoxysilane, n-propyltriethoxysilane, n-propyltrimethoxysilane, t-butyltriethoxysilane, t-butylmethyldimethoxysilane, t-butylmethyldiethoxysilane, t-butylethyldimethoxysilane, t-butylpropyldimethoxysilane, t-butyl-t-butoxydimethoxysilane, t-butyltrimethoxysilane, i-butyltrimethoxysilane, isobutylmethyldimethoxysilane, i-butyl-sec-butyldimethoxysilane, ethyl(perhydroisoquinolin-2-yl)dimethoxysilane, bis(decahydroisoquinolin-2-yl)dimethoxysilane, tri(isopropenyloxy)phenylsilane, thexyltrimethoxysilane, vinyltriethoxysilane, phenyltriethoxysilane, phenyltrimethoxysilane, vinyltributoxysilane, diphenyldimethoxysilane, diisopropyldimethoxysilane, diisobutyldimethoxysilane, i-butyl-i-propyldimethoxysilane, cyclopentyl-t-butoxydimethoxysilane, dicyclopentyldimethoxysilane, cyclohexylmethyldimethoxysilane, cyclohexyl-i-butyldimethoxysilane, cyclopentyl-i-butyldimethoxysilane, cyclopentylisopropyldimethoxysilane, di-sec-butyldimethoxysilane, diethylaminotriethoxysilane, tetraethoxysilane, tetramethoxysilane, isobutyltriethoxysilane, phenylmethyldimethoxysilane, phenyltriethoxysilane, bis-p-tolyldimethoxysilane, p-tolylmethyldimethoxysilane, dicyclohexyldimethoxysilane, cyclohexylethyldimethoxysilane, 2-norbomanetriethoxysilane, 2-norbomanemethyldimethoxysilane, diphenyldiethoxysilane, methyl(3,3,3-trifluoropropyl)dimethoxysilane, ethyl silicate and the like are preferred.

### (4) Polymerization

Raw material monomers are brought into contact with the catalyst prepared as described above, so that polymerization is performed. On this occasion, it is preferable that pre-polymerization be performed by using the catalyst described above. The pre-polymerization is a step of forming a polymer chain as a scaffold of the subsequent final polymerization of the raw material monomers on the solid catalyst component. The pre-polymerization may be performed by a known method. The pre-polymerization is performed usually at 40°C or less, preferably 30°C or less, more preferably 20°C or less. Subsequently, the catalyst after pre-polymerization (pre-polymerized catalyst) is introduced into a polymerization reaction system for the final polymerization of the raw material monomers. The polymerization may be performed in a liquid phase, a gas phase or a liquid-gas phase. The polymerization temperature is preferably ambient temperature to 150°C, more preferably 40°C to 100°C. The polymerization pressure is preferably in the range from 3.3 to 6.0 MPa for the polymerization in a liquid phase, and preferably in the range from 0.5 to 3.0 MPa for the polymerization in a gas phase. A conventional molecular weight adjusting agent known in the field such as chain transfer agent (e.g., hydrogen or ZnEt₂) may be used.

Also, a polymerization reactor having gradient in the monomer concentration and the polymerization conditions may be used. In such a polymerization reactor for use, for example, at least two polymerization areas are connected to achieve polymerization of monomers through gas-phase polymerization. Specifically, in the presence of a catalyst, the monomers are supplied to the polymerization area of a riser so as to be polymerized, and the monomers are supplied to the polymerization area of a downcomer connected to the riser so as to be polymerized, such that a polymer product circulated through the riser and the downcomer is collected. The method includes a means for thoroughly or partially preventing a gas mixture present in the riser from entering the downcomer. Also, a gas or liquid mixture having a composition different from the gas mixture present in the riser is introduced into the downcomer. As the polymerization method, for example, a method described in JP 2002-520426A may be applied.

### 3. Application

The polypropylene composition is most suitable as a resin composition for injection molding. The polypropylene composition has an excellent balance between stiffness and impact resistance, in addition to high melt flowability. Specifically, it is preferable that the polypropylene composition of the present invention have the following characteristics.

### 1) Stiffness (flexural modulus): JIS K6921-2

The polypropylene composition of the present invention has a flexural modulus of, preferably 700 MPa or more, more preferably 800 MPa or more, still more preferably 900 MPa or more.

### 2) Charpy impact strength: JIS K6921-2

The polypropylene composition of the present invention has a Charpy impact strength of, preferably 20 kJ/m² or more, more preferably 25 kJ/m² or more, still more preferably 30 kJ/m² or more.

### 3) Nominal tensile strain at break: JIS K6921-2

The polypropylene composition of the present invention has a nominal tensile strain at break of, preferably 20% or more, more preferably 30% or more, still more preferably 40% or more.

The polypropylene composition of the present invention is different from a conventional composition with an improved MFR obtained by tentatively producing a polymer with a low MFR, adding an organic peroxide as molecular weight reducing agent thereto, and melt-kneading the mixture. Therefore, the amount of VOC in production is low and no odor problem occurs.

Having the physical properties described above, the polypropylene composition of the present invention is useful as automobile interior materials and food packaging materials. The propylene composition of the present invention may be injection molded to directly make a product, or may be injection molded to make a thin molded article such as a sheet, which is then subjected to secondary processing such as vacuum forming and pressure forming so as to make a product. The use of the polypropylene composition of the present invention is not limited to the above, and the composition is also useful for general miscellaneous articles.

### Examples

### [Example 1]

A solid catalyst composed of Ti and diisobutylphthalate as an internal donor supported on MgCl₂ was prepared by a method described in lines 46 to 53 in Example 5 of European Patent Publication No. 728769. Specifically, the preparation was made in the following manner.

Microspheroidal MgCl₂·2.1C₂H₅OH was produced in the following manner. Under an inert gas at ambient temperature, 48 g of anhydrous MgCl₂, 77 g of anhydrous C₂H₅OH and 830 mL of kerosene were put in a 2-L autoclave having a turbine stirrer and a suction pipe. While stirring, the content was heated to 120°C, so that an adduct was formed between MgCl₂ and the alcohol. The adduct was melted and mixed with a dispersant. The nitrogen pressure in the autoclave was maintained at 15 atm. The suction pipe of the autoclave was heated to 120°C from the outside with use of a heating jacket. The suction pipe had an inner diameter of 1 mm, and a length of 3 m from one end to the other end of the heating jacket. Through the pipe, the mixture flowed at a rate of 7 m/sec. At an outlet of the pipe, the dispersion was collected in a 5-L flask containing 2.5 L of kerosene while stirring, and being cooled from the outside with a jacket of which initial temperature was maintained at -40°C. The final temperature of the dispersion was 0°C. A spherical solid product constituting the dispersed phase of the emulsion was sedimentation-precipitated, separated by filtration, washed with heptane and dried. All of the operations were performed in an inert gas atmosphere. Solid spherical particle MgCl₂·3C₂H₅OH having a maximum diameter of 50 µm or less was thus obtained. The yield was 130 g. From the product thus obtained, alcohol was removed until the alcohol content decreased to 2.1 mol per mole of MgCl₂, by gradually raising temperature from 50°C to 100°C in a nitrogen stream.

In a 500-mL cylindrical glass reactor having a filtration barrier, 225 mL of TiCl₄ was put at 0°C, and further, 10.1 g (54 mmol) of microspheroidal MgCl₂·2.1C2H₅OH obtained as described above was put therein over 15 minutes while stirring the content. The temperature was then raised to 40°C, and 9 mmol of diisobutylphthalate was put therein. The temperature was raised to 100°C over 1 hour, and stirring was continued for further 2 hours. Subsequently, TiCl₄ was removed by filtration, and while stirring for further 1 hour at 120°C, 200 mL of TiCl₄ was added. Finally, the content was filtered and washed with n-heptane at 60°C until total extinction of chlorine ions from the filtrate. The catalyst component thus obtained contained 3.3% by weight of Ti and 8.2% by weight of diisobutylphthalate.

Subsequently, the above solid catalyst, triethylaluminium (TEAL) as an organoaluminum compound, and dicyclopentyldimethoxysilane (DCPMS) as an external electron donor compound were brought into contact to each other at a weight ratio of TEAL to the solid catalyst of 20 and a weight ratio of TEAL to DCPMS of 10, at 12°C for 24 minutes, so as to obtain a catalyst.

The catalyst thus obtained was maintained in a suspension state in liquid propylene at 20°C for 5 minutes for pre-polymerization to proceed, so that a prepolymer was obtained. The prepolymer thus obtained was introduced to a first-stage polymerization reactor of a polymerization unit having two-stage polymerization reactors in series, and propylene was further supplied thereto for the polymerization to proceed, so that a propylene homopolymer as component (1) was produced. The propylene homopolymer as component (1) in powder form thus obtained had an average particle size of 2.2 mm, and an average pore diameter of 9.4 µm. To a second-stage polymerization reactor, the above propylene homopolymer, ethylene and propylene were supplied for the polymerization to proceed, so that an ethylene/propylene copolymer as component (2) was produced. Thereby, a polymer consisting of component (1) and component (2) was obtained.

During polymerization, the temperature and the pressure were adjusted, and hydrogen was used as a molecular weight adjusting agent. The polymerization temperature and the ratio of the reactants were as follows. In the first-stage polymerization reactor, the polymerization temperature and hydrogen concentration were 70°C and 2.44 mol%, respectively. In the second-stage polymerization reactor, the polymerization temperature, the hydrogen concentration and the molar ratio C2/(C2 + C3) were 80°C, 1.88 mol%, and a molar ratio of 0.21, respectively. C2 and C3 represent ethylene and propylene, respectively. Also, the residence time distribution between the first stage and the second stage was adjusted to have a ratio of the ethylene/propylene copolymer component as component (2) to the polypropylene polymer consisting of component (1) and component (2), i.e., component (2)/[component (1) + component (2)], of 36.0% by weight. The data on the characteristics of component (1), component (2) and the polymer consisting of component (1) and component (2) are shown in Table 1.

To 100 parts by weight of a polymer consisting of component (1) and component (2), 0.25 parts by weight of B225 manufactured by BASF as an antioxidant, 0.05 parts by weight of DHT-4A manufactured by Kyowa Chemical Industry Co., Ltd. as a neutralizer, 0.2 parts by weight of ADEKASTAB LA502XP manufactured by ADEKA Corporation as a weathering stabilizer, 0.2 parts by weight of ADEKASTAB NA18 manufactured by ADEKA Corporation as a nucleating agent, and 0.1 parts by weight of glycerol monostearate as an antistatic agent were added, and the mixture was stirred with a Henschel mixer for 1 minutes. The mixture was melt-kneaded and extruded with a co-rotating twin-screw extruder having a screw diameter of 15 mm manufactured by Technovel Corporation, at a cylinder temperature of 230°C. The strand was cooled in water, and then cut by a pelletizer, so that a polypropylene composition comprising the polymer in a pellet form was obtained. The polypropylene composition was evaluated by the method described below. The results are shown also in Table 1.

### [Example 2]

A polypropylene composition was produced and evaluated in the same manner as in Example 1, except that the hydrogen concentration in the first-stage reactor was changed to 2.17 mol%, the hydrogen concentration in the second stage reactor was changed to 2.21 mol%, and the residence time distribution in the first stage and the second stage was adjusted to have component (2)/[component (1) + component (2)] of 37.2% by weight.

### [Example 3]

A polypropylene composition was produced and evaluated in the same manner as in Example 1, except that the hydrogen concentration in the first-stage reactor was changed to 2.17 mol%, the molar ratio C2/(C2 + C3) in the second-stage reactor was changed to a molar ratio of 0.20, and the residence time distribution in the first stage and the second stage was adjusted to have component(2)/[component (1) + component (2)] of 34.4% by weight.

### [Example 4]

A polypropylene composition was produced and evaluated in the same manner as in Example 2, except that the hydrogen concentration in the first-stage reactor was changed to 2.48 mol%, and the hydrogen concentration and the molar ratio C2/(C2 + C3) in the second-stage reactor was changed to 2.04 mol% and a molar ratio of 0.27, respectively.

### [Example 5]

A polypropylene composition was produced and evaluated in the same manner as in Example 2, except that the hydrogen concentration in the first-stage reactor was changed to 2.74 mol%, and the hydrogen concentration and the molar ratio C2/(C2 + C3) in the second-stage reactor was changed to 1.75 mol% and a molar ratio of 0.17, respectively.

### [Example 6]

A solid catalyst composed of Ti and diisobutylphthalate as an internal donor supported on MgCl₂ was prepared by a method described in lines 21 to 36 in paragraph 32 of JP2004-27218A. Specifically, the preparation was made in the following manner.

Under nitrogen atmosphere at 120°C, 56.8 g of anhydrous magnesium chloride was completely dissolved in 100 g of anhydrous ethanol, 500 mL of Vaseline oil "CP15N" manufactured by Idemitsu Kosan Co. Ltd., and 500 mL of silicone oil "KF96" manufactured by Shin-Etsu Chemical Co., Ltd. The solution was stirred with a T. K. Homomixer manufactured by PRIMIX Corporation at 120°C and 5000 rpm for 2 minutes. While stirring, the solution was poured into 2 L of anhydrous heptane, such that the temperature was kept under 0°C. The white solid thus obtained was sufficiently washed with anhydrous heptane, vacuum dried at room temperature, and ethanol was partially removed under nitrogen stream, so that 30 g of spherical solid of MgCl₂·1.2C₂H₅OH was obtained.

In 200 mL of anhydrous heptane, 30 g of spherical solid of MgCl₂·1.2C₂H₅OH was suspended. While stirring at 0°C, 500 mL of titanium tetrachloride was dropped therein over 1 hour. Subsequently, after the suspension was heated to 40°C, 4.96 g of diisobutylphthalate was added thereto, and the temperature was raised to 100°C in about 1 hour. After the reaction at 100°C for 2 hours, the solid portion was collected by hot filtration. Then, 500 mL of titanium tetrachloride was added to the reactant, and after stirring, the reaction proceeded at 120°C for 1 hour. After completion of the reaction, the solid portion was collected again by hot filtration and washed with 1.0 L of hexane at 60°C 7 times and with 1.0 L of hexane at room temperature 3 times, so that a solid catalyst was obtained. The titanium content in the solid catalyst component thus obtained was measured to be 2.36% by weight.

With use of the solid catalyst, a polypropylene composition was produced and evaluated in the same manner as in Example 1. However, the hydrogen concentration in the first-stage reactor was changed to 2.24 mol%, the hydrogen concentration and the molar ratio C2/(C2 + C3) in the second-stage reactor were changed to 2.04 mol% and a molar ratio of 0.23, respectively, and the residence time distribution in the first stage and the second stage was adjusted to have component(2)/[component (1) + component (2)] of 34.1% by weight. The powder propylene homopolymer component (1) thus obtained had an average particle size of 1.2 mm and an average pore diameter of 7.0 µm.

### [Comparative Example 1]

A polypropylene composition was produced and evaluated in the same manner as in Example 6, except that the hydrogen concentration in the first-stage reactor was changed to 1.75 mol%, the hydrogen concentration and the molar ratio C2/(C2 + C3) in the second-stage reactor were changed to 1.88 mol% and a molar ratio of 0.21, respectively, and the residence time distribution in the first stage and the second stage was adjusted to have component(2)/[component (1) + component (2)] of 28.4% by weight.

**Table 1]**

| Examples and Comparative Example | | | | | | | | |
|---|---|---|---|---|---|---|---|---|
| | | Example | | | | | | Comparative Example |
| | | 1 | 2 | 3 | 4 | 5 | 6* | 1 |
| Component (1), component (2), and polymer consisting of component (1) and component (2) | | | | | | | | |
| MFR of component (1) | g/10 min | 218 | 180 | 181 | 224 | 264 | 190 | 126 |
| XI of component (1) | % by weight | 98.3 | 98.3 | 98.5 | 98.1 | 98.1 | 98.6 | 98.0 |
| Mw/Mn of XI of component (1) | - | 5.5 | 5.5 | 5.5 | 5.5 | 5.5 | 5.5 | 5.5 |
| Average pore diameter (Dn) of component (1) | mm | 9.4 | 9.4 | 9.4 | 9.4 | 9.4 | 7.0 | 7.0 |
| Average particle size (diameter) of component (1) | mm | 2.2 | 2.2 | 2.2 | 2.2 | 2.2 | 1.2 | 1.2 |
| Ethylene-derived unit of component (2) | % by weight | 27.4 | 27.5 | 26.2 | 31.6 | 23.3 | 28.5 | 27.5 |
| Component (2)/[component (1) + component (2)] | % by weight | 36.0 | 37.2 | 34.4 | 37.3 | 37.2 | 34.1 | 28.4 |
| XSIV of [component (1) + component (2)] | dl/g | 2.3 | 2.1 | 2.3 | 2.2 | 2.4 | 2.2 | 2.3 |
| MFR of [component (1) + component (2)] | g/1053 | 29 | 29 | 28 | 30 | 28 | 32 | 30 |
| Powder flowability of [component (1) + component (2)] | - | 1.5 | 1.5 | 1.5 | 1.5 | 1.5 | 3.8 | 1.5 |

| | | | | | | | | |
|---|---|---|---|---|---|---|---|---|
| *comparative | | | | | | | | |

| Polypropylene composition in pellet form | | | | | | | | |
|---|---|---|---|---|---|---|---|---|
| [component (1) + component (2)] | Part by weight | 100 | 100 | 100 | 100 | 100 | 100 | 100 |
| Additive | Part by weight | 0.8 | 0.8 | 0.8 | 0.8 | 0.8 | 0.8 | 0.8 |

| Molded article | | | | | | | | |
|---|---|---|---|---|---|---|---|---|
| Flexural modulus | MPa | 1,050 | 990 | 1,060 | 1,000 | 920 | 1,130 | 1,230 |
| Charpy impact strength | kJ/m² | 50 | 51 | 30 | 51 | 52 | 40 | 12 |
| Nominal tensile strain at break | % | 42 | 58 | 47 | 32 | 400 | 39 | 35 |

### [Measurement condition]

### 1) MFR

To 5 g of a powder sample, 0.05 g of H-BHT manufactured by Honshu Chemical Industry Co., Ltd. was added. After homogenization by dry blending, measurement was performed under conditions at a temperature of 230°C and under a load of 2.16 kg in accordance with JIS K6921-2.

### 2) XI of component (1)

While stirring, 2.5 g of a polymer was dissolved in 250 mL of xylene at 135°C. After 20 minutes, the solution was cooled to 25°C while stirring, and then left standing still for 30 minutes. The precipitate was filtered with a filter paper, and the solution was evaporated in a nitrogen stream. The residue was dried to a specific weight under vacuum at 80°C. The % by weight of polymers soluble in xylene at 25°C was thus calculated. The amount of xylene insolubles (% by weight of polymers insoluble in xylene at 25°C, XI) is determined from 100 - "% by weight of soluble polymers", which can be presumed as the amount of isotactic components of the polymer. In order to collect xylene insolubles, the precipitate was sufficiently washed with methanol to remove the remaining xylene and then dried under vacuum at 80°C.

### 3) Mw/Mn of XI component of component (1)

The sample of xylene insolubles was subjected to measurement of molecular weight distribution (Mw/Mn) in the following manner. PL GPC220 manufactured by Polymer Laboratories Ltd. was used as apparatus, 1,2,4-trichlorobenzene containing an antioxidant was used as mobile phase, one UT-G, one UT-807 and two UT-806M manufactured by Showa Denko K.K. were connected in series for use as a column, and a differential refractometer was used as detector. The solvent of a sample solution was the same as the mobile phase. Through dissolution at a sample concentration of 1 mg/mL for 2 hours while shaking at a temperature of 150°C, a sample for measurement was prepared. Into the column, 500 µL of the sample solution thus obtained was injected for the measurement at a flow rate of 1.0 mL/min, at a temperature of 145°C, and at an interval of data acquisition of 1 second. The calibration of the column was made through a cubic spline with use of a polystyrene standard sample (SHODEX STANDARD manufactured by Showa Denko K.K.) having a molecular weight of 5800000 to 7450000. As Mark-Houwink-Sakurada coefficients, K = 1.21×10⁻⁴ and α = 0.707 were used for the polystyrene standard sample, and K = 1.37×10⁴ and α = 0.75 were used for the polypropylene homopolymer, the propylene random copolymer, and the polypropylene polymer.

### 4) Average particle size and average pore diameter of component (1)

The bulk density of component (1) was measured with a full-automatic pore distribution measurement apparatus PORE MASTER 60-GT manufactured by Quanta Chrome Corporation. The average particle size of component (1) was obtained by measuring the number of particles per gram to determine the average weight per piece, determining the average volume per piece from the bulk density, and calculating the average diameter as a sphere from the average volume. Also, using the same apparatus, the distribution of pore diameter D was measured in the range of 1 µm to 100 µm by the mercury intrusion method according to JIS R1655 so as to calculate the average pore diameter Dn from the following equation: $Dn = \int \left(-dV/dlogD\right) dlogD / \int \left(1/D\right) \left(-dV/dlogD\right) dlogD$ wherein V represents the sample volume, which corresponds to the subtraction of pore volume from volume (bulk volume) of each particle.

### 5) Ethylene-derived unit of component (2)

A ¹³C-NMR spectrum of the sample dissolved in a mixed solvent of 1,2,4-trichlorobenzen and deuterated benzene was obtained by using AVANCE III HD400 (¹³C resonance frequency: 100 MHz) manufactured by Bruker Corporation, under conditions of a measurement temperature of 120°C, a flip angle of 45 degrees, a pulse interval of 7 seconds, a sample rotation number of 20 Hz, and a cumulative number of 5000.

From the spectrum thus obtained, a total amount of ethylene (% by weight) in the polymer consisting of component (1) and component (2) was determined by the method described in literature: Kakugo, Y. Naito, K. Mizunuma and T. Miyatake, Macromolecules 15, 1150-1152 (1982). The ethylene content (% by weight) in component (2) was obtained by the same method as that for calculating the total amount of ethylene, except that the integrated intensity T'ββ obtained from the following equation was used instead of the integrated intensity Tββ obtained in the measurement of the total amount of ethylene: $T ′ ββ = 0.98 \times Sαγ \times A / \left(1-0.98\times A\right)$ wherein A = Say/(Say + Saδ) is calculated from Sαγ and Sαδ described in the literature described above.

### 6) Weight ratio component (2)/[component (1) + component (2)]

The content of component (2) relative to the total weight of component (1) and component (2) was determined from the following equation: 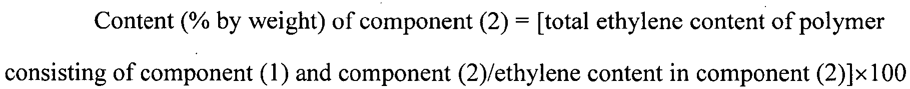 Content (% by weight) of component (2) = [total ethylene content of polymer consisting of component (1) and component (2)/ethylene content in component (2)]×100

### 7) Intrinsic viscosity (XSIV) of [component (1) + component (2)]

Xylene solubles in the polymer consisting of component (1) and component (2) was obtained by the following method so as to measure the intrinsic viscosity (XSIV) of the xylene solubles.

In a flask containing 250 mL of o-xylene (solvent), 2.5 g of a sample of the polymer consisting of component (1) and component (2) was put, the solvent was stirred for 30 minutes at 135°C while purging nitrogen by using a hot plate and a reflux device so as to completely dissolve the polymer, and the solution was cooled at 25°C for 1 hour. The solution thus obtained was filtered with a filter paper. After the filtration, 100 mL of the filtrate was collected, transferred into an aluminum cup or the like, subjected to evaporation to dryness at 140°C while purging nitrogen, and left standing still for 30 minutes at room temperature to obtain xylene solubles.

The intrinsic viscosity was measured in tetrahydronaphthalene at 135°C, using an automatic capillary viscometer (SS-780-H1, manufactured by Shibayama Scientific Co., Ltd.).

### 8) Powder flowability

On a metal plate, a metal frame having an opening with a length of 5 cm, a width of 5 cm, and a height of 1 cm was placed. In the metal frame, 5 g of polymer consisting of component (1) and component (2) as a sample was spread. A metal lid having a weight of 0.92 g was placed in the metal frame, such a uniform pressure of 23 g/cm² was applied to the sample. After the sample in the metal frame was held at 70°C for 20 minutes, the metal frame and the metal lid were removed, and the metal plate on which the sample was placed was tilted to make the following 5-grade evaluation 4 times for calculation of the average.
1: The total volume of sample collapses when the substrate is tilted at 0° or more and less than 30°.
2: The total volume of sample collapses when the substrate is tilted at 30° or more and less than 50°.
3: The total volume of sample collapses when the substrate is tilted at 50° or more and less than 70°.
4: The total volume of sample collapses when the substrate is tilted at 70° or more and less than 90°.
5: No total volume collapse occurs even when the substrate is tilted at 90° or more.

The metal plate, the metal frame and the metal lid were made of stainless steel SUS 304. The surface of the metal plate for use was #400-grit polished (sisal finish) to have a surface roughness (maximum roughness Ry) of 0.2 µm.

### 9) Flexural modulus

The measurement was made in accordance with JIS K6921-2. Specifically, in accordance with JIS K7171, a polypropylene composition was subjected to injection molding using an injection molding machine (FANUC ROBOSHOT S2000i manufactured by FANUC Corporation) under conditions of a molten resin temperature of 200°C, a mold temperature of 40°C, an average injection rate of 200 mm/s, a holding time of 40 seconds, and a total cycle time of 60 seconds so as to make a multi-purpose test piece (type A1) specified in JIS K7139. The resulting molded article was processed to have a width of 10 mm, a thickness of 4 mm, and a length of 80 mm, so that a measurement test piece (type B2) was obtained. The flexural modulus of the test piece of type B2 was measured using a precision universal tester (AUTOGRAPH AG-X 10 kN manufactured by Shimadzu Corporation ), under conditions of a temperature of 23°C, a relative humidity of 50%, a distance between supporting points of 64 mm, and a testing speed of 2 mm/min.

### 10) Charpy impact strength

In accordance with JIS K6921-2, a test piece of type A1 obtained in the same operation as for the test piece for use in the flexural modulus was measured. Specifically, in accordance with JIS K7111-1, after processing to have a width of 10 mm, a thickness of 4 mm, and a length of 80 mm, a 2-mm notch was made in the width direction, using a notching tool A-4 manufactured by Toyo Seiki Seisaku-sho, Ltd. so that a measurement test piece having a shape A was obtained. The Charpy impact strength (edgewise impact, method 1 eA) of the test piece was measured using a full-automatic impact tester having a cryostat (No. 258-ZA) manufactured by Yasuda Seiki Seisakusho Ltd., under conditions of a temperature of 23°C and a relative humidity of 50%.

### 11) Nominal tensile strain at break

In accordance with JIS K6921-2, a test piece of type A1 obtained in the same operation as for the test piece for use in the flexural modulus was used for the measurement. Specifically, in accordance with JIS K7161-2, the nominal tensile strain at break was measured using a precision universal tester (AUTOGRAPH AG-X 10 kN) manufactured by Shimadzu Corporation, under conditions of a temperature of 23°C, a relative humidity of 50%, and a testing speed of 50 mm/min.

The polypropylene compositions in Examples 1 to 6 had excellent melt flowability and excellent balance between the stiffness and the impact resistance. In particular, in Examples 1 to 5, even though the weight ratio of component (2) (i.e., component (2)/[component (1) + component (2)]) is high, the polymer consisting of component (1) and component (2) had excellent powder flowability as well as excellent production stability. In Example 6, although the powder flowability was inferior to those in Examples 1 to 5, under planned production conditions just before facility shutdown or under cold weather conditions enabling easy reduction in stickiness of the powder surface due to efficient natural cooling of the powder, stable production can be achieved. As described above, the polypropylene composition of the present invention can be stably produced, having the advantage of enabling supply to the market at low cost. In contrast, the composition in Comparative Example 1 having a weight ratio of component (2) (i.e., component (2)/[component (1) + component (2)]) out of the range of the present invention had poor impact resistance.

## Claims

1. A polypropylene composition comprising a polymer consisting of component (1) and component (2):
as component (1), a propylene homopolymer having 100 to 300 of MFR (at a temperature of 230°C under a load of 2.16 kg) and containing more than 97.5% by weight of xylene insolubles (XI), wherein XI of the propylene homopolymer has a Mw/Mn of 4 to 10 as measured by GPC;
as component (2), an ethylene/propylene copolymer containing 15 to 50% by weight of an ethylene-derived unit;
wherein the polypropylene composition has the following characteristics:
1) the relative proportions of component (1) and component (2) are, respectively, not less than 50 parts by weight but less than 70 parts by weight and more than 30 parts by weight but not more than 50 parts by weight,
2) the intrinsic viscosity of xylene solubles (XSIV) of the aforementioned polymer is in the range of 1.5 to 4.0 dl/g,
3) the MFR (at a temperature of 230°C under a load of 2.16 kg) of the aforementioned polymer is in the range of 20 to 100 g/10 min;
wherein the aforementioned component (1) is porous particles having an average particle diameter of 1.5 to 4.0 mm and an average pore diameter (Dn) of 8 to 50 µm; and
wherein the aforementioned polymer consisting of component (1) and component (2) is a powder, and flowability of the powder is equal or less than 3.5.

## Patentansprüche

1. Eine Polypropylen-Zusammensetzung, die ein Polymer umfasst, das aus Komponente (1) und Komponente (2) besteht:
als Komponente (1), ein Propylen-Homopolymer mit einem MFR von 100 bis 300 (bei einer Temperatur von 230 °C unter einer Belastung von 2,16 kg), das mehr als 97,5 Gew.-% Xylol-Unlösliche (XI) enthält, wobei XI des Propylen-Homopolymers ein Mw/Mn von 4 bis 10, gemessen mittels GPC, aufweist;
als Komponente (2) ein Ethylen/Propylen-Copolymer, das 15 bis 50 Gew.-% einer von Ethylen abgeleiteten Einheit enthält;
wobei die Polypropylen-Zusammensetzung die folgenden Eigenschaften aufweist:
1) die relativen Anteile von Komponente (1) und Komponente (2) betragen jeweils nicht weniger als 50 Gewichtsteile, jedoch weniger als 70 Gewichtsteile, sowie mehr als 30 Gewichtsteile, jedoch nicht mehr als 50 Gewichtsteile,
2) die intrinsische Viskosität der Xylol-Löslichen (XSIV) des vorgenannten Polymers liegt im Bereich von 1,5 bis 4,0 dl/g,
3) der MFR (bei einer Temperatur von 230 °C unter einer Belastung von 2,16 kg) des vorgenannten Polymers liegt im Bereich von 20 bis 100 g/10 min;
wobei die vorgenannte Komponente (1) poröse Partikel mit einem mittleren Partikeldurchmesser von 1,5 bis 4,0 mm und einem mittleren Porendurchmesser (Dn) von 8 bis 50 µm sind; und
wobei das vorgenannte Polymer, bestehend aus Komponente (1) und Komponente (2), ein Pulver ist und die Fließfähigkeit des Pulvers 3,5 oder weniger beträgt.

## Revendications

1. Composition de polypropylène comprenant un polymère constitué d'un composant (1) et d'un composant (2) :
comme composant (1), un homopolymère de propylène présentant un MFR compris entre 100 et 300 (à une température de 230 °C sous une charge de 2,16 kg) et contenant plus de 97,5 % en poids de matières insolubles dans le xylène (XI), les XI de l'homopolymère de propylène ayant un rapport Mw/Mn compris entre 4 et 10, tel que mesuré par GPC ;
en tant que composant (2), un copolymère d'éthylène/propylène contenant 15 à 50 % en poids d'un motif dérivé de l'éthylène ;
la composition de polypropylène présentant les caractéristiques suivantes :
1) les proportions relatives du composant (1) et du composant (2) sont, respectivement, d'au moins 50 parties en poids mais inférieures à 70 parties en poids, et de plus de 30 parties en poids mais ne dépassant pas 50 parties en poids,
2) la viscosité intrinsèque des solubles dans le xylène (XSIV) du polymère susmentionné est comprise entre 1,5 et 4,0 dl/g,
3) l'indice de fluidité à chaud (MFR) (à une température de 230 °C sous une charge de 2,16 kg) du polymère susmentionné est compris entre 20 et 100 g/10 min ;
dans lequel le composant (1) susmentionné est constitué de particules poreuses ayant un diamètre moyen de particule compris entre 1,5 et 4,0 mm et un diamètre moyen des pores (Dn) compris entre 8 et 50 µm ; et
dans lequel le polymère susmentionné, constitué du composant (1) et du composant (2), se présente sous forme de poudre, et l'indice de fluidité de cette poudre est égal ou inférieur à 3,5.
